# EUROPÄISCHE PATENTSCHRIFT

(11) **EP 2 530 215 B1**
(45) Veröffentlichungstag und Bekanntmachung des Hinweises auf die Patenterteilung: **04.03.2015**
(21) Anmeldenummer: 12168299.1
(22) Anmeldetag: 16.05.2012
(51) Int. Cl.: E04C 3/12, B29C 70/08, B29C 70/54, B32B 5/02, B32B 21/08

(54) **Tragstruktur sowie Bauelement mit einer derartigen Tragstruktur**
Support structure and construction element with such a support structure
Structure porteuse ainsi que composant avec une structure porteuse de ce type

(30) Priorität: 01.06.2011 DE 102011076873
(43) Veröffentlichungstag der Anmeldung: 05.12.2012
(73) Patentinhaber: Thermoplast Composite GmbH, 91474 Langenfeld (DE)
(72) Erfinder: Börger, Herbert, 91474 Langenfeld (DE)
(74) Vertreter: Rau, Schneck & Hübner Patentanwälte Rechtsanwälte PartGmbB

(56) Entgegenhaltungen:
- WO-A1-97/34060
- WO-A2-2010/069935
- DE-B3- 10 349 110
- ARBELAIZ A ET AL: "Mechanical properties of short flax fibre bundle/polypropylene composites: Influence of matrix/fibre modification, fibre content, water uptake and recycling", COMPOSITES SCIENCE AND TECHNOLOGY, ELSEVIER, UK, Bd. 65, Nr. 10, 1. August 2005 (2005-08-01), Seiten 1582-1592, XP027688202, ISSN: 0266-3538 [gefunden am 2005-08-01]
- CANCHE-ESCAMILLA G ET AL: "Flexural, impact and compressive properties of a rigid-thermoplastic matrix/cellulose fiber reinforced composites", COMPOSITES PART A: APPLIED SCIENCE AND MANUFACTURING, ELSEVIER SCIENCE PUBLISHERS B.V., AMSTERDAM, NL, Bd. 33, Nr. 4, 1. April 2002 (2002-04-01), Seiten 539-549, XP004340327, ISSN: 1359-835X, DOI: 10.1016/S1359-835X(01)00136-1

## Beschreibung

Die Erfindung betrifft eine Tragstruktur mit einer Kernschicht und einer Verstärkungslage aus faserverstärktem Kunststoff. Ferner betrifft die Erfindung ein Bauelement mit einer derartigen Tragstruktur.

Tragstrukturen und hiermit ausgeführte Bauelemente werden in vielen Bereichen benötigt, beispielsweise auf dem Bausektor oder auch im Automobilbau. Ein Beispiel für den diesbezüglichen Stand der Technik liefert die WO 2009/103474 A1. Aus der DE 10 2009 023 737 A1 sind Verbundwerkstoffe mit digital bedruckten Vliesstoffen bekannt. Verbundwerkstoffe sind weiterhin bekannt aus der DE 10 2007 008 423 A1.

Es ist eine Aufgabe der vorliegenden Erfindung, eine Tragstruktur der eingangs genannten Art so weiterzubilden, dass sie einerseits stabil, andererseits aber auch möglichst leicht und unaufwändig bearbeitbar ist.

Diese Aufgabe ist erfindungsgemäß gelöst durch eine Tragstruktur mit den im Anspruch 1 angegebenen Merkmalen.

Es wurde erkannt, dass Holz als Bestandteil der Kernschicht anders als z. B. isolierte Holzfasern als Baustoff unaufwändig innerhalb der Tragstruktur verwendet werden kann. Die Holz-Kernschicht besteht aus natürlichem Holz. Die Naturfaser-Verstärkungslagen bilden eine Armierung, die einem Verzug der Holz-Kernschicht vorbeugt und der Tragstruktur bei geringem Gewicht die erforderliche Steifigkeit verleiht. Der Einsatz der Naturfasern ermöglicht ein Bearbeiten der Tragstruktur, insbesondere einen Zuschnitt, mit vergleichsweise geringem Aufwand und insbesondere mit geringem Verschleiß für Bearbeitungswerkzeuge. Ein Fräsen der Verstärkungslage ist beispielsweise ohne weiteres möglich und erzeugt allenfalls geringen Verschleiß. Bei der Holz-Kernschicht kann es sich um einen Brettstapelbalken, um einen Schichtholzabschnitt, um einen Massivholz-balken oder um einen Sperrholzkern handeln. Eine derartige Holz-Kernschicht wird gemäß DIN EN 14080 auch als Brettschichtholz (BS-Holz, BSH) bezeichnet.Der Stoffschluss zwischen der Verstärkungslage und der Holz-Kernschicht kann durch Laminieren oder Verkleben erfolgen. Bei der Polymermatrix kann es sich um einen Duroplast oder um einen Thermoplast handeln. Beispiele für duromere Matrix-Polymere sind Phenol-, Melamin-, Polyester-, Epoxid- und Polyurethan-Harze. Beispiele für thermoplastische Matrix-Polymere sind Polypropylen- (PP), Styrol-Acrylnitril-(SAN), Polyethylenterephthalat-(PBT), Acrylnitril-Butadien-Styrol-(ABS), thermoplastische Polyuretan-Elastomer-(TPU), Polycarbonat-(PC) oder Polymethylmethacrylat-(PMMA) Harze. Die Naturfasern können Faserlängen im Bereich zwischen 10 mm und 100 mm oder auch noch längere Einzelfaserlängen aufweisen. Ein Elastizitätsmodul der Naturfasern kann im Bereich zwischen 80 GPa und 100 GPa liegen. Ein Biege-Elastizitätsmodul eines Naturfaser-Polymermatrix-Geleges kann im Bereich zwischen 20 GPa und 35 GPa und insbesondere im Bereich von 30 GPa liegen. Ein spezifisches Elastizitätsmodul, d. h. ein dichtenormiertes Elastizitätsmodul, kann im Bereich von 20 GPa/kg/dm³ liegen. Die Naturfaser kann eine Dichte im Bereich zwischen 1,0 g/cm³ und 1,6 g/cm³ aufweisen. Die Naturfaser kann eine Faserstärke im Bereich von 10 bis 100 µm, und insbesondere im Bereich von 20 µm aufweisen. Naturfasern ergeben Verstärkungslagen, die eine gute Verbundhaftung aufweisen. SAN führt insbesondere zu einer guten Verbundhaftung. Verstärkungslagen mit Naturfasern können mit hoher Witterungsbeständigkeit und geringer Feuchtigkeitsaufnahme realisiert werden. Insgesamt ergibt sich eine Tragstruktur, die zu einem großen Anteil aus nachwachsenden Rohstoffen gefertigt ist. Der Einsatz von Verbundwerkstoffen mit Naturfasern ist bekannt aus der DE 103 49 110 B3, DE 102 51 518 B4, WO 97/34060 A1 und WO 2010/069 935 A2. Die eingebetteten Naturfasern werden von der Polymermatrix zumindest teilweise umhüllt. Auch eine Einbettung so, dass die Naturfasern von der Polymermatrix vollständig umhüllt werden, ist möglich. Eine Verstärkungslage der Tragstruktur dient zur strukturellen Verstärkung von dieser, also zur Aufnahme von Kräften, die auf die Tragstruktur wirken, beispielsweise zur Aufnahme von Biege-, Druck- oder Torsionskräften. Eine Dekorlage stellt keine derartige Verstärkungslage dar. Eine Anisotropie der Faserausrichtung ermöglicht es, die Verstärkungslage an eine bestimmte Kraftbeanspruchung, der die Tragstruktur unterliegt, spezifisch anzupassen. Auch eine unidirektionale Faserausrichtung zur Kraftanpassung ist möglich. Die Verstärkungslage weist mehrere Teillagen mit unterschiedlichen Vorzugs-Ausrichtungen der Naturfasern auf. Innerhalb jeweils einer der Teillagen liegt eine einheitliche Ausrichtung der Naturfasern im Wesentlichen in einer Richtung vor. Es liegt also insbesondere kein Fasergewebe vor. Verschiedene Ausrichtungsabfolgen je nach den Beanspruchungsanforderungen sind möglich. Die Verstärkungslage kann z. B. zweilagig mit der Ausrichtungs-Abfolge 0°/90° sein.

Naturfasern nach Anspruch 2 haben sich hinsichtlich des geringen Bearbeitungsverschleißes als besonders geeignet herausgestellt. Zellulose-Fasern beziehungsweise Bastfasern haben eine vorteilhafte chemische und strukturelle Ähnlichkeit zu Holz und haben eine vorteilhaft niedrige Faserdichte.

Flachs als Naturfasermaterial hat sich aufgrund seiner Eigenschaftskombination als besonders geeignet herausgestellt. Das Flachs kann als endlosversponnene, diskontinuierliche Faser mit etwa 100 mm Einzel-Faserlänge verarbeitet werden, wobei die Faser in Form von Kardenbändern verarbeitet werden.

Alternativ zu Flachs kann auch eine andere Naturfaser, beispielsweise Hanf, Ramie, Sisal, Abaca oder Kokos zum Einsatz kommen.

Ein Fasergehalt nach Anspruch 4 hat sich als besonders geeignet herausgestellt. Der Fasergehalt kann mindestens 25 Volumenprozent oder auch mindestens 40 Volumenprozent sein. Eine Untergrenze des Fasergehalts kann bei 42 Volumenprozent liegen.

Eine Decklage nach Anspruch 5 führt zu einem gefälligen Erscheinungsbild der Tragstruktur. Eine Decklage kann die Weiterbearbeitung und Veredelung der Tragstruktur ermöglichen. Derartige Weiterbearbeitungs- beziehungsweise Veredelungsverfahren sind dem Fachmann bekannt. Die Decklage kann aus Sperrholz oder Furnier ausgeführt sein. Alternativ kann die Decklage durch eine Einfärbung oder eine Kunststoff-Folie gebildet sein.

Matrix-Polymermaterialien nach Anspruch 6 haben sich für die Polymermatrix als besonders geeignet herausgestellt.

Verstärkungslagen-Anordnungen nach den Ansprüchen 7 und 8 sind je nach dem Belastungsanforderungen an die Tragstruktur vorteilhaft. Es können auch mehrere beabstandete Verstärkungs-Trennlagen innerhalb der Tragstruktur vorliegen. Bei den Tragstruktur-Abschnitten kann es sich insbesondere um Abschnitte der Holz-Kernschicht handeln, beispielsweise um mindestens einen Schichtholz-Kernabschnitt bzw. um mindestens einen Massivholz-Stab oder Massivholz-Balken.

Die Vorteile eines Bauelements nach Anspruch 9 entsprechen denen, die vorstehend unter Bezugnahme auf die Tragstruktur bereits erläutert wurden. Das Bauelement kann ein Träger in Dächern und Decken, beispielsweise für ein Fertighaus, sein. Das Bauelement kann beim Innenausbau von Häusern oder Schiffen zum Einsatz kommen. Das Bauelement kann als Tür oder als sonstige Komponente im Möbelbau oder im Ingenieurholzbau zum Einsatz kommen.

Ein Ausführungsbeispiel der Erfindung wird nachfolgend anhand der Zeichnung erläutert. In dieser zeigen:
- Figur 1: einen Querschnitt durch eine Tür mit einer erfindungsgemäßen Tragstruktur;
- Figur 2: schematisch in einer zu Figur 1 ähnlichen Querschnittsdarstellung eine weitere Ausführung einer Tragstruktur; und
- Figuren 3 und 4: in zu Figur 2 ähnlichen Querschnittsdarstellungen weitere Ausführungen einer Tragstruktur.

Eine Haustür 1 als Beispiel für ein Bauelement hat eine als Flächentragelement ausgeführte Tragstruktur 2. Die Tragstruktur 2 stellt gleichzeitig das Türblatt der Tür 1 dar.

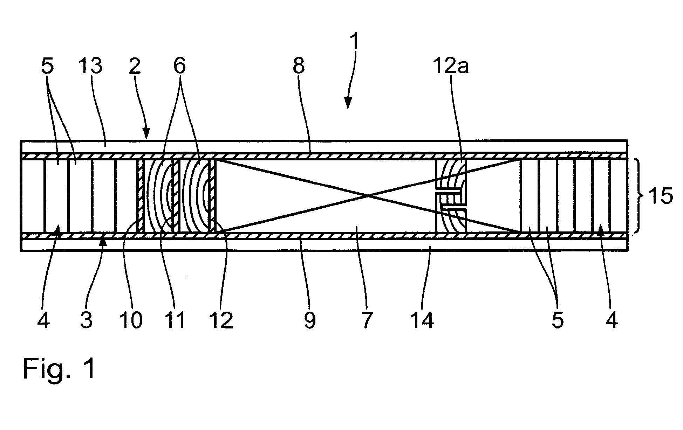

Die Tragstruktur 2 hat abschnittsweise eine Holz-Kernschicht 3. Beiderseits im Bereich einer Stirnseite des in der Figur 1 gezeigten Querschnitts umfasst die Holz-Kernschicht 3 jeweils einen Schichtholz-Kernabschnitt 4 aus jeweils einer Mehrzahl einzelner Holzbretter 5, die miteinander verleimt sind. Ein solcher Schichtholz-Kernabschnitt 4 wird auch als Brettstapelbalken beziehungsweise Brettschichtholz-Balken bezeichnet. Jeder der beiden randseitigen Schichtholz-Kernabschnitte 4 hat eine Mehrzahl derartiger Holzbretter 5. Je nach Ausführung können drei bis etwa zehn derartiger Holzbretter 5 miteinander verleimt den jeweiligen Schichtholz-Kernabschnitt 4 bilden. Zur Holz-Kernschicht 3 gehören weiterhin mehrere Massivholz-Stäbe oder -Balken 6.

Zusätzlich zur Holz-Kernschicht 3 hat die Tragstruktur 2 noch einen inneren Schalldämmungskern 7 aus schalldämmendem Material. Der Schalldämmungskern 7 muss keine Holzbestandteile beinhalten.

Die Tragstruktur 2 hat zudem zwei Haupt-Verstärkungs-Lagen 8, 9, die die Hauptflächen der Flächentragelement-Tragstruktur 2 abdecken, im vorliegenden Ausführungsbeispiel also die gesamte Vorderfläche und die gesamte Rückfläche des Türblatts. Weiterhin hat die Tragstruktur 2 als Trennlagen ausgeführte Zusatz-Verstärkungslagen 10, 11, 12. Die Zusatz-Verstärkungslage 10 ist als Trennlage zwischen dem in der Figur 1 links dargestellten Schichtholz-Kernabschnitt 4 und dem diesem benachbarten Massivholz-Stab 6 ausgeführt. Die Zusatz-Verstärkungslage 11 ist als Trennlage zwischen den beiden Massivholz-Stäben 6 ausgeführt. Die Zusatz-Verstärkungslage 12 ist als Trennlage zwischen dem in der Figur 1 rechts dargestellten Massivholz-Stab 6 und dem Schalldämmungskern 7 ausgebildet. Die Zusatz-Verstärkungslagen in 10 bis 12 stellen bei verbauter Tür 1 stehende Laminat-Rippen dar.

Der Schalldämmungskern 7 weist Naturholz-Leisten 12a auf, die beidseitig an die Haupt-Verstärkungs-Lagen 8, 9 angeleimt sind. Dargestellt ist in der

Figur 1 stellvertretend für eine Mehrzahl Naturholz-Leisten genau eine der Naturholz-Leisten 12a. Die Naturholz-Leisten 12a haben einen S-förmigen Querschnitt und haben dadurch eine Federwirkung zwischen ihren Verbindungspunkten zwischen den Haupt-Verstärkungs-Lagen 8, 9. Ein an die jeweilige Haupt-Verstärkungs-Lage 8, 9 angeleimter Leisten-Teilquerschnitt der Naturholz-Leisten 12a wirkt als stabilisierende Rippe für die jeweilige Haupt-Verstärkungs-Lage 8, 9. Zudem verringert die S-förmige, federnde Gestaltung der Naturholz-Leisten 12a eine Schallübertragung senkrecht zu den Haupt-Verstärkungs-Lagen 8, 9 durch die Tür 1.

Die Verstärkungslagen 8 bis 12 sind aus faserverstärktem Kunststoff gebildet und sind flächig und stoffschlüssig mit der Holz-Kernschicht 3 verbunden. Die Verstärkungslagen 8 bis 12 haben jeweils eine Polymermatrix mit eingebetteten Naturfasern. Bei der dargestellten Ausführung der Tragstruktur 2 handelt es sich bei den Naturfasern der Verstärkungslagen 8 bis 12 um Flachs.

Die Verstärkungslagen 8 bis 12 haben einen Fasergehalt von mindestens 25 Volumenprozent. Der Fasergehalt liegt im Bereich zwischen 25 und 60 Volumenprozent, beispielsweise bei 42 Volumenprozent.

Als Matrix-Polymer der Verstärkungslagen 8 bis 12 dient Polypropylen (PP). Auch Styrol-Acrylnitril (SAN) kann als Matrix-Polymer zum Einsatz kommen.

Die Zusatz-Verstärkungslagen 10 bis 12 sind zwischen die Kernschichten, zwischen denen sie angeordnet sind, heiß laminiert. Das Matrix-Polymer dringt dabei als Binder in die poröse Holzoberfläche des benachbarten Holzbretts 5 oder des benachbarten Massivholz-Stabs 6 der Holzkernschicht 3 ein. Eine Anbindung der Zusatz-Verstärkungslage 12 an den Schalldämmungskern 7 ist nicht erforderlich.

Die Haupt-Verstärkungslagen 8, 9 werden jeweils von einer die Verstärkungslagen 8, 9 überdeckenden Decklage 13, 14 in Form einer Sperrholz-Deckplatte abgedeckt. Die Decklagen 13, 14 haben eine Stärke im Bereich zwischen 2,5 mm und 8,5 mm.

Die Haupt-Verstärkungslagen 8, 9 sind zwischen die Holz-Kernschicht 3 einerseits und die jeweilige Decklage 13, 14 andererseits heißlaminiert oder geklebt. Alternativ zu der Sperrholz-Ausführung können die Decklagen 13, 14 auch durch eine Lackierung, eine sonstige Einfärbung oder durch eine Kunststoff-Folie gebildet sein.

Stirnseitig hat die Tragstruktur 2 noch Beschläge in Form von Scharnieren 15, die in der Figur 1 lediglich schematisch angedeutet sind. Diese Beschläge sind nicht notwendigerweise mit den Verstärkungslagen 8 bis 12 der Tragstruktur 2 direkt verbunden. Die Verbindung der Beschläge mit der Tragstruktur 2 erfolgt über die Holz-Kernschicht 3.

Die Verstärkungslagen 8 bis 12, insbesondere die Haupt-Verstärkungslagen 8 und 9, sind als Mehrlagenschicht mit einer Mehrzahl von Teillagen aufgebaut. Diese, in der Figur 1 nicht dargestellten Teillagen haben jeweils eine Vorzugs-Ausrichtung der eingebetteten Naturfasern. Die Verstärkungslagen 8 bis 12 haben also eine anisotrope, insbesondere praktisch unidirektionale Faserausrichtung.

Die verschiedenen Teillagen haben unterschiedliche Vorzugs-Ausrichtungen. Die Abfolge der Ausrichtungswinkel der Faserausrichtung der Teillagen innerhalb beispielsweise den Haupt-Verstärkungslagen 8, 9 kann 0°/90°/0°/90°/0° oder 0°/+45°/0°/-45°/0° sein. Bei diesen Abfolgebeispielen ist vorausgesetzt, dass die Haupt-Verstärkungslagen 8, 9 jeweils fünf Teillagen aufweist. Auch andere Ausrichtungs-Winkelabfolgen sind möglich. Auch eine andere Anzahl von Teillagen innerhalb einer der Verstärkungslagen 8 bis 12 ist möglich.

Die Teillagen werden aufeinander heiß auflaminiert, wobei ein Verbund zwischen den einzelnen Teillagen durch das Matrix-Polymer hergestellt wird.

Alternativ zu einem Laminieren zur Verbindung der Verstärkungslagen 8 bis 12 mit den anliegenden Komponenten der Tragstruktur 2 kann auch ein Verkleben erfolgen.

Alternativ können die Verstärkungslagen 8 bis 12 auch insgesamt praktisch unidirektional ausgerichtete Naturfasern aufweisen, also jeweils einlagig ausgeführt sein.

Die Tragstruktur 2 kann auch bei anderen Bauelementen zum Einsatz kommen, beispielsweise bei Trägern in Dächern und Decken für Fertighäuser, beim Innenausbau von Häusern, Schiffen usw. oder generell im Möbelbau oder im Ingenieurholzbau.

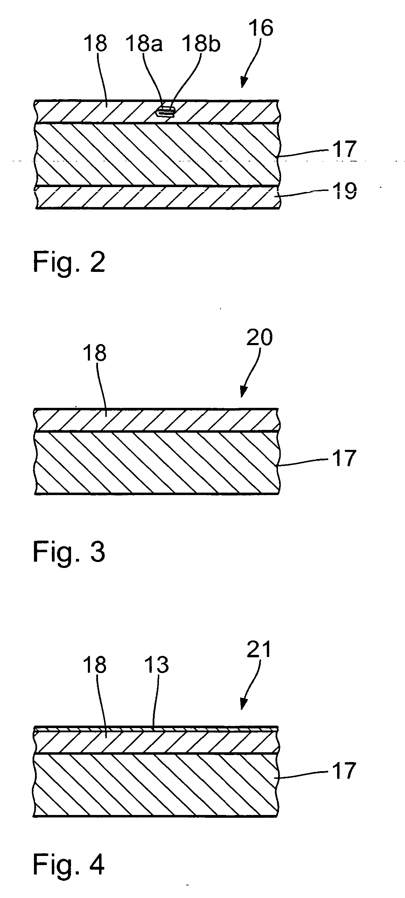

Anhand der Figur 2 wird nachfolgend eine weitere Ausführung einer Tragstruktur 16 erläutert. Komponenten, die denjenigen entsprechen, die vorstehen und in Bezugnahme auf die Figur 1 bereits erläutert wurden, tragen die gleichen Bezugsziffern und werden nicht nochmals im Einzelnen diskutiert.

Die Tragstruktur 16 hat eine Holz-Kernschicht 17, bei der es sich um eine Massivholzschicht oder um einen Schichtholz-Kern mit Holzbrettern analog zum Schichtholz-Kernabschnitt 4 der Ausführung nach Figur 1 handeln kann. Bei der Holz-Kernschicht 17 kann es sich auch um eine Sperrholzschicht handeln. Beidseitig wird die Holz-Kernschicht 17 abgedeckt durch zwei Verstärkungslagen 18, 19, deren Aufbau den Haupt-Verstärkungslagen 8, 9 nach Figur 1 entspricht. In einem Ausschnitt der Verstärkungslage 18 sind einige der Naturfasern 18a dargestellt, die in die Polymermatrix 18b eingebettet sind.

Die beiden Verstärkungslagen 18, 19 sind auf die Holz-Kernschicht 17 heiß auflaminiert.

Anhand der Figur 3 wird nachfolgend auf eine weitere Ausführung einer Tragstruktur 20 erläutert. Komponenten, die denjenigen entsprechen, die vorstehend unter Bezugnahme auf die Figuren 1, 2 bereits erläutert wurden, tragen die gleichen Bezugsziffern und werden nicht nochmals im Einzelnen diskutiert.

Im Unterschied zur Tragstruktur 16 nach Figur 2 hat die Tragstruktur 20 ausschließlich eine Verstärkungslage 18, die der Verstärkungslage 18 der Tragstruktur 16 nach Figur 2 entspricht.

Anhand der Figur 4 wird nachfolgend auf eine weitere Ausführung einer Tragstruktur 21 erläutert. Komponenten, die denjenigen entsprechen, die vorstehend unter Bezugnahme auf die Figuren 1 bis 3 bereits erläutert wurden, tragen die gleichen Bezugsziffern und werden nicht nochmals im Einzelnen diskutiert.

Im Unterschied zur Ausführung nach Figur 3 hat die Tragstruktur 21 eine zusätzliche Decklage 13, die der Decklage 13 der Ausführung nach Figur 1 entspricht.

## Patentansprüche

1. Tragstruktur (2; 16; 20; 21)
- mit einer zumindest abschnittsweise vorliegenden HolzKernschicht (3; 17),
- mit mindestens einer Verstärkungslage (8 bis 12; 18, 19; 18) aus faserverstärktem-Kunststoff, die flächig und stoffschlüssig mit der Holz-Kemschicht (3; 17) verbunden ist,
- wobei die Verstärkungslage (8 bis 12; 18, 19; 18)
-- eine Polymermatrix (18b) mit eingebetteten Naturfasern (18a) und
-- eine anisotrope Faserausrichtung aufweist,
**dadurch gekennzeichnet, dass**
- die Verstärkungslage (8 bis 12; 18, 19; 18) mehrere Teillagen mit unterschiedlichen Vorzugs-Ausrichtungen der Naturfasern (18a) aufweist.

2. Tragstruktur nach Anspruch 1, **dadurch gekennzeichnet dass** die eingebeteten Naturfasern (18a) Zellulose enthalten.

3. Tragstruktur nach Anspruch 2, **dadurch gekennzeichnet, dass** die eingebetteten Naturfasern (18a) Flachs enthalten.

4. Tragstruktur nach einem der Ansprüche 1 bis 3, **dadurch gekennzeichnet, dass** die Verstärkungslage (8 bis 12; 18, 19; 18) einen Fasergehalt von mindestens 25 Volumenprozent aufweist.

5. Tragstruktur nach einem der Ansprüche 1 bis 4, **gekennzeichnet durch** eine die Verstärkungslage (8, 9; 18) überdeckende Decklage (13, 14; 13) aus einem Holzwerkstoff.

6. Tragstruktur nach einem der Ansprüche 1 bis 5, **gekennzeichnet durch** PP oder SAN als Matrix-Polymer der Polymermatrix (18b).

7. Tragstruktur nach einem der Ansprüche 1 bis 6, **dadurch gekennzeichnet, dass** die Tragstruktur (2; 16; 20; 21) als Flächentragelement ausgeführt ist, wobei die Verstärkungslage (8, 9; 18, 19; 18) mindestens eine der Hauptflächen des Flächentragelements abdeckt.

8. Tragstruktur nach einem der Ansprüche 1 bis 7, **dadurch gekennzeichnet, dass** die Verstärkungslage (10 bis 12) als Trennlage zwischen Tragstruktur-Abschnitten (4, 6; 6, 6; 6, 7) angeordnet ist.

9. Bauelement (1) mit einer Tragstruktur (2) nach einem der Ansprüche 1 bis 9.

## Claims

1. Support structure (2; 16; 20; 21)
- with a wooden core layer (3; 17) provided at least in sections,
- with at least one reinforcing layer (8 to 12; 18, 19; 18) made of fibre-reinforced plastic, which is connected flat and in a materially bonded manner to the wooden core layer (3; 17),
- wherein the reinforcing layer (8 to 12; 18, 19; 18) comprises
-- a polymer matrix (18b) with embedded natural fibres (18a) and
-- has an anisotropic fibre alignment,
**characterised in that**
- the reinforcing layer (8 to 12; 18, 19; 18) comprises several part layers with different preferred alignments of the natural fibres (18a).

2. Support structure according to claim 1, **characterised in that** the embedded natural fibres (18a) contain cellulose.

3. Support structure according to claim 2, **characterised in that** the embedded natural fibres (18a) contain flax.

4. Support structure according to any one of claims 1 to 3, **characterised in that** the reinforcing layer (8 to 12; 18, 19; 18) has a fibre content of at least 25 percent by volume.

5. Support structure according to any one of claims 1 to 4, **characterised by** a cover layer (13, 14; 13) made from a wood material which covers the reinforcing layer (8, 9; 18).

6. Support structure according to any one of claims 1 to 5, **characterised by** PP or SAN as the matrix polymer of the polymer matrix (18b).

7. Support structure according to any one of claims 1 to 6, **characterised in that** the support structure (2; 16; 20; 21) is configured as a surface support element, wherein the reinforcing layer (8, 9; 18, 19; 18) covers at least one of the main surfaces of the surface support element.

8. Support structure according to any one of claims 1 to 7, **characterised in that** the reinforcing layer (10 to 12) is arranged as a separating layer between support structure sections (4, 6; 6, 6; 6, 7).

9. Construction element (1) with a support structure (2) according to any one of claims 1 to 8.

## Revendications

1. Structure porteuse (2 ; 16 ; 20 ; 21)
- comprenant la présence d'une couche centrale en bois (3 ; 17) au moins sur des portions,
- comprenant au moins une couche de renforcement (8 à 12 ; 18, 19 ; 18) à base d'une matière synthétique renforcée de fibres qui est reliée à plat et par couplage de matière avec la couche centrale en bois (3 ; 17),
- la couche de renforcement (8 à 12 ; 18, 19 ; 18) présentant
-- une matrice polymère (18b) avec des fibres naturelles (18a) intégrées, et
-- une orientation anisotrope des fibres,
**caractérisée en ce que**
- la couche de renforcement (8 à 12, 18, 19 ; 18) présente plusieurs couches partielles avec des orientations préférentielles diverses des fibres naturelles (18a).

2. Structure porteuse selon la revendication 1, **caractérisée en ce que** les fibres naturelles (18a) intégrées contiennent de la cellulose.

3. Structure porteuse selon la revendication 2, **caractérisée en ce que** les fibres naturelles (18a) intégrées contiennent du lin.

4. Structure porteuse selon l'une des revendications 1 à 3, **caractérisée en ce que** la couche de renforcement (8 à 12 ; 18, 19 ; 18) présente une teneur en fibres d'au moins 25 pour cent en volume.

5. Structure porteuse selon l'une des revendications 1 à 4, **caractérisée par** une couche de recouvrement (13, 14 ; 13) à base d'un matériau dérivé du bois recouvrant la couche de renforcement (8, 9 ; 18).

6. Structure porteuse selon l'une des revendications 1 à 5, **caractérisée par** du PP ou du SAN en tant que matrice polymère de la matrice polymère (18b).

7. Structure porteuse selon l'une des revendications 1 à 6, **caractérisée en ce que** la structure porteuse (2 ; 16 ; 20 ; 21) est conçue comme un élément support d'une surface, dans laquelle la couche de renforcement (8, 9 ; 18, 19 ; 18) recouvre au moins l'une des surfaces principales de l'élément support d'une surface.

8. Structure porteuse selon l'une des revendications 1 à 7, **caractérisée en ce que** la couche de renforcement (10 à 12) est disposée entre des parties de structure porteuse (4, 6 ; 6 ; 6, 7) sous la forme d'une couche de séparation.

9. Elément préfabriqué (1) comprenant une structure porteuse (2) selon l'une des revendications 1 à 9.
